# EUROPEAN PATENT SPECIFICATION

(11) **EP 4 514 486 B1**
(45) Date of publication and mention of the grant of the patent: **03.06.2026**
(21) Application number: 23724196.3
(22) Date of filing: 27.04.2023
(51) Int. Cl.: A63F 7/06, A63F 9/16, A63H 1/00, A63H 1/20, A63H 7/04, A63H 11/10, A63H 17/00

(54) **MODULAR TOY**
MODULARES SPIELZEUG
JOUET MODULAIRE

(30) Priority: 27.04.2022 DK PA202270222
(43) Date of publication of application: 05.03.2025
(73) Proprietor: LEGO A/S, 7190 Billund (DK)
(72) Inventor: DE FINE LICHT, Peter, 7190 Billund (DK); ANDERSEN, Hans Jessen, 7190 Billund (DK); ROMIJNDERS, Ruben, 7190 Billund (DK)
(74) Representative: Guardian IP Consulting I/S
(86) International application number: PCT/EP2023/061078
(87) International publication number: WO 2023/209072

(56) References cited:
- WO-A1-2020/142187
- WO-A1-82/03335
- DE-U1- 202018 103 336
- US-A1- 2007 205 554

## Description

The present invention relates to a modular toy.

### Background of the invention

GB2134397 A discloses a toy car with two parallel wheels and a ball rotatably retained by an arch-shaped recess. WO82/03335 A discloses a modular toy according to the preamble of claim 1.

Modular toys in the form of e.g. carts are known in the art. Toy carts may cost efficiently be formed in a polymer material, typically injection moulded plastics. Such toy carts are often light weight, which affects their rolling performance. Further, such toy carts, even modular toy carts, are often very limited in their function. There is thus a need in the art for a versatile modular toy, where the rolling performance of a cart body of the modular toy is improved, so that also the play options are increased.

### Summary of the invention

It is therefore an object of the invention to increase the variety of play options.

This is achieved by a modular toy comprising
- a toy figurine; and
- a cart body;

wherein the cart body comprises
   - a hub portion having an upper side, a lower side, and a side surface, the toy figurine being releasably attachable to the upper side of the hub portion, such that the toy figurine is non-rotationally attached to the cart body; and
   - three or more sphere connectors extending radially from the side surface of the hub portion,
wherein each sphere connector is configured for releasably attaching a spherical body, such that when a spherical body is attached to the sphere connector, the spherical body is rotatable relative to the sphere connector, and
wherein the sphere connectors are arranged such that the centre of the spherical bodies attached to the sphere connectors are in the same plane parallel to the lower surface of the hub portion.

By "non-rotationally attached" is meant that when attached the toy figurine is prevented from rotation relative to the cart body.

The non-rotationally attachment of the toy figurine allows a user easily manipulate the cart, for example spinning it.

The spherical bodies are preferably releasably attached in the sphere connectors in a snap connection. The snap connection is preferably provided by the material of the sphere connectors being slightly flexible, and/or by a shape of an inner surface of the sphere connectors.

The connection between the sphere connector and a sphere body is configured such that the sphere body is freely rotatable relative to the sphere connector, and thereby to the cart body.

Due to the spherical bodies being freely rotatable in all directions relative to the sphere connectors, when sphere bodies are attached in each sphere connector of the cart body, the toy cart may roll in any direction on a surface on which it is placed. Thereby, the play options are increased, as the toy figurine may be transported in unlimited paths.

Preferably, the spherical bodies are all of equal size, i.e. they have the same radius. The radius of the spherical bodies and the dimensions of the cart are arranged such that, when a spherical body is attached in each of the sphere connectors, and the spherical bodies rest on a planar surface, e.g. a floor or a table, the lower side of the hub portion is lifted above that planar surface. Further, in that situation, all other portions of the cart are lifted above that surface.

The spherical bodies may be marbles, such as stone marbles or glass marbles. However, they may also be formed in other materials such as metal or in principle polymers. In preferred embodiments the spherical bodies are formed in a "heavy" material, such that the cart of the toy may - when pushed or rotated - obtain more momentum, which affects its rolling properties.

Each of the sphere connectors of the toy are, in preferred embodiments, configured for attaching spherical bodies having the same diameter.

The sphere connectors may be generally ring-shaped structures, where the inner surface of the ring shaped structure has a concavity configured to hold the spherical body. In further embodiments the sphere connectors may be generally ring-shaped structures having identical inner diameters, such that they are configured to attach spherical bodies having equal diameters.

In an embodiment, the toy may further comprise a spherical body for each sphere connector. Thus, if the cart has three sphere connectors, the toy comprises at least three spherical bodies, and if the cart has four sphere connectors, the toy comprises at least four spherical bodies.

In an embodiment, the toy figurine is releasably attachable to the upper surface of the hub portion by the upper surface being provided with coupling means of a first type, and by a lower surface of the toy figurine being provided with coupling means of a second type, where the coupling means of a first type and the coupling means of a second type are mutually corresponding.

In an embodiment thereof, the non-rotational attachment of the toy figurine to the hub portion is provided by two spaced apart coupling means of a first type on the upper side of the hub portion, and the lower surface of the toy figurine being provided with two equidistantly arranged coupling means of the second type.

In some embodiments thereof, the coupling means of a first type may be provided by a particular cross sectional shape of the legs or feet of the toy figurine, and where the coupling means of a second type may be provided by corresponding openings provided in the upper surface of the hub portion of the cart, the openings having a cross sectional shape cooperating with the shape of the coupling means of the second type. Thereby, the toy figurine may be loosely attached to the cart in the sense that the cooperating shapes prevents movement of the toy figurine relative to the cart in any direction in a plane parallel to the above mentioned first plane, thereby allowing manipulation (spinning, liner movement, etc.) of the cart though the toy figurine, and allowing movement in a direction perpendicular to the first plane. Thereby, the toy figurine can very easily be attached to and removed from the cart, and further the toy figurine may be ejected from the cart, for example on impact with another object.

Alternatively, and in a preferred embodiment, the coupling means are knobs, and the coupling means of the second type are knob-receiving openings. Such coupling means are known in the art, and allows attachment via a press fit.

The toy in these embodiments may for example be used in games, where a number of users, each having a copy of the toys, may compete in getting as close as possible to an edge of a surface, such as a table, without falling over the edge. Users may also compete in a petanque (boule) or curling-like game where the object is to get as close as possible to a given point or line on a planar surface. The ability of the toy to spin and slide may increase the complexity of the game. A toy may also be used in an "air hockey" type game, where two users opposing each other pushes the toy from side to side between them.

In either of the above embodiments, the toy may further comprise a spinning element, the spinning element being releasably attachable to the hub portion at the lower side thereof, the spinning element having an upper surface and a lower convex surface and a first height, wherein the first height is such that when the spinning element is attached to the hub portion, and the toy is rested on a planar surface, a maximum of two of the spherical bodies rest on the planar surface.

This means that if the toy is spun, for example by manipulating the toy figurine, all of the spherical bodies will elevate from the surface on which the toy is spun, and will function as a classical spinning toy. The weight of the spherical bodies will add momentum and prolong the spinning of the toy. Thereby, when the spinner element is attached, additional play options are added. For example, two or more users each having a toy according to this embodiment may let their toy figurines battle against each other in spinning battels.

In any of the above embodiments either the toy figurine, or the cart, or both, may be provided with coupling means of a third kind, configured to attach another object such as a toy spear, a toy sword or a toy flag.

The first height is defined between the upper surface and the lower convex surface of the spinning element.

In an embodiment, the spinning element is releasably attachable to the lower side of the hub portion by the upper surface of the spinning element being provided with coupling means of a first type, and the lower surface of the hub portion being provided with coupling means of a second type, and where the coupling means of a first type and the coupling means of a second type are mutually corresponding.

In a further embodiment, the coupling means of the first type are knobs, and the coupling means of the second type are knob-receiving openings.

In further embodiments, the embodiments relating to releasably connecting the toy figurine to the hub portion of the cart, and the embodiments for connecting the spinning element to the hub portion of the cart may be combined, such that the same coupling means of the first type and the same coupling means of the second types are used for both sets of embodiments.

The combination of the cart body with sphere bodies attached in the sphere connectors, and a spinner element attached to the cart body, allows the use of the cart as a spinner/spinning top, where the sphere bodies provide weight to the spinner by providing a momentum when spun. Attaching a toy figurine to the cart body allows an easy way for a user to spin the assembly and thereby an improved spinning top/spinner is provided. Further, the toy figurine being attached to the cart and spinning element allows the modular toy to appear like a spinning person, for example a fighting ninja. This is cool.

In further embodiments, the spinning element comprises a spacer element and spinner tile, where the spacer element is connectable at one end to the lower surface of the hub portion and at an opposite end to the spinner tile, and where the convex surface of the spinning element is the lower surface of the spinner tile.

In a further embodiment, thereof the spacer element is cylindrical in shape and has tubular element rotationally attached on an outside surface of the spacer element. Thereby, the tubular element may be rotationally connected relative to the cart.

This tubular element may be provided with one or more coupling means of a third kind, configured to attach another object such as a toy spear, a toy sword or a toy flag. Thereby, flags, swords or spears may for example be brought to rotate in a different direction than the cart, or in the same direction, but with a different rotational speed.

In either of the above embodiments, the sphere connectors may be ring shaped, and wherein an inner surface of the ring-shaped sphere connector is provided with an annular cavity corresponding to an arc of the spherical body.

In either of the above mentioned embodiments the toy figurine, or any subcomponent thereof is preferably formed in a polymer material, such as a plastic. The toy figurine, or any subcomponent, may be formed in an injection moulding process.

In either of the above mentioned embodiments the hub portion and the sphere connectors may be formed as one integrated unit, and preferably in a polymer material, such as a plastic. Thereby the cart body of the cart may be formed in an injection moulding process.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

In the following, the invention will be described in greater detail with reference to embodiments shown by the enclosed figures. It should be emphasized that the embodiments shown are used for example purposes only and should not be used to limit the scope of the invention.
Fig. 1, in a perspective view, shows a modular toy according to one embodiment of the invention, the modular toy comprising a toy figurine and a cart with three spherical bodies;
Fig. 2A, in a perspective view, shows a modular toy according to another embodiment of the invention, the modular toy comprising a toy figurine and a cart with three spherical bodies;
Fig. 2B, in a perspective view, shows a cart body of the cart shown in Fig. 2A, and with three spherical bodies for a toy, the cart comprising coupling means of a first type;
Fig. 3, in perspective view shows a toy figurine for a toy according to the invention, the toy figurine having coupling means of a second type complementary with coupling means of a first type;
Fig. 4A, in a perspective view from below, shows a prior art modular construction element, the modular construction element having coupling means of a first type - in the form of knobs - formed on one surface and coupling means of a second type - knob receiving openings - on an opposite surface;
Fig. 4B, in a see-through perspective view from above, shows the prior art modular construction element of Fig. 4A;
Fig. 5, in a cross sectional side view, shows a cart for a toy according to yet an embodiment of the invention;
Fig. 6A, in a cross sectional side view, shows the cart of Fig. 5 with a spinning element attached thereto
Fig. 6B, in a cross sectional side view, shows the cart of Fig. 5 with a spinning element detached therefrom;
Fig 7A, in a cross sectional side view, shows the cart of Fig. 5 with a spinning element attached thereto, where the spinning element is constructed from two modular construction elements, a spacer element and a spinner tile; and
Fig. 7B shows the cart of Fig. 7B, with the spacer element and the spinner tile of the spinning element detached from the cart and from each other.

### Detailed description of the embodiments

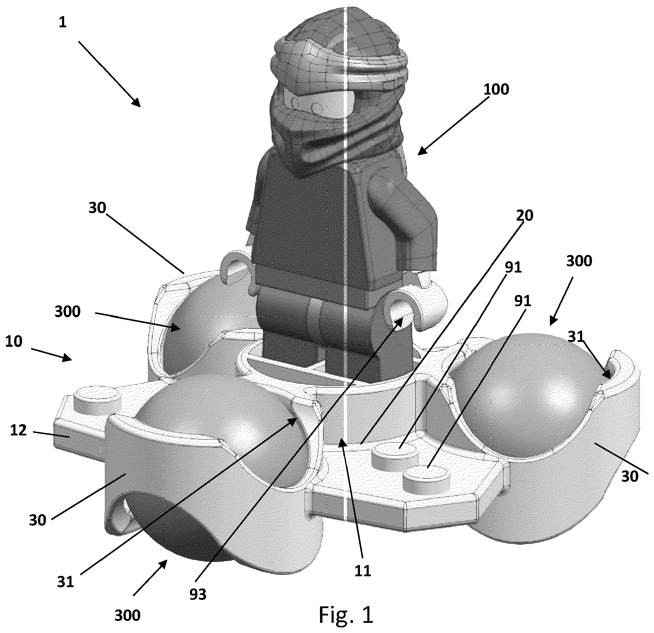

Fig. 1A shows one embodiment of modular toy 1 according to the invention, and Fig. 1B show another. The two embodiments are almost identical, apart from a few detail, which will be mentioned below. In either embodiment, the modular toy 1 comprises a toy figurine 100 and a cart 10. The toy figurine 100 is releasably attachable to the cart 10 as describe further below. Thus, the toy figurine 100 may be used with ether cart 10 and vice versa.

The cart 10 comprises a cart body 11 and three spherical bodies 300 attached thereto. The spherical bodies 300 are releasably attachable to the cart 10, so that they may be replaced or interchanged. The spherical bodies 300 may for example be provided with patterns or have different colours. Having a larger number of spherical bodies 300 than being attachable to the cart at the same time will allow a user to customize the cart.

The cart body 11 comprises a hub portion 20 and three sphere connectors 30 extending radially outwards from the hub portion 20, the sphere connectors 30 being arranged in a plane, and in the same plane as the hub. Thus, the cart body 11 is a generally flat structure.

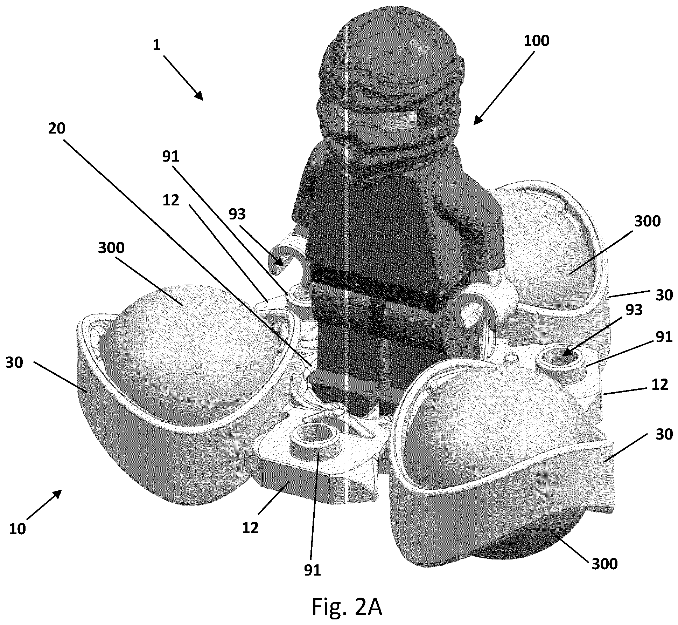

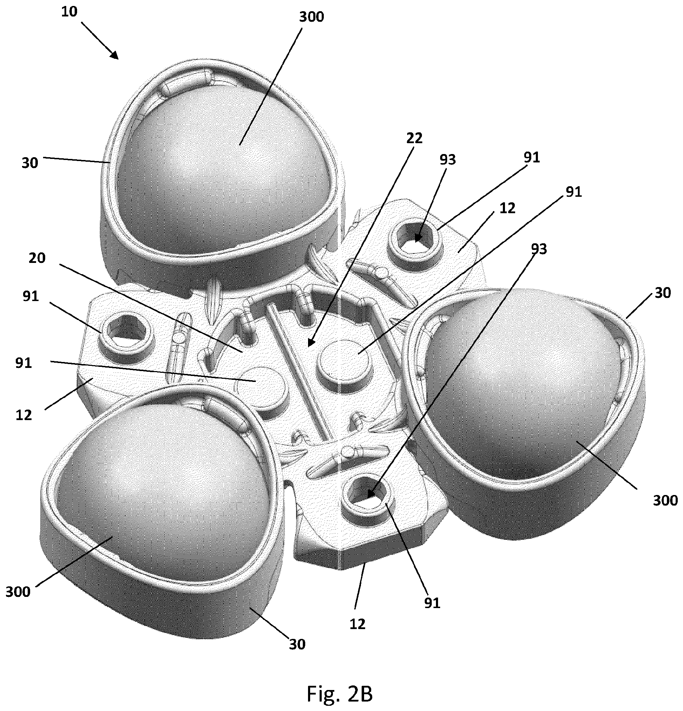

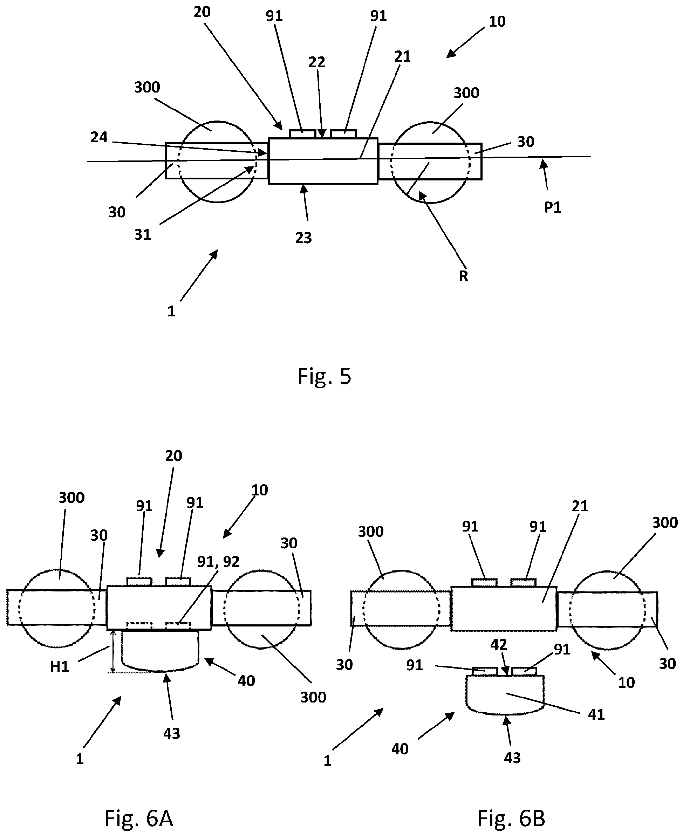

Referring also to Figs. 2 and e.g. Fig 6A, the hub portion 20 comprises, body 21 having an upper side 22, a lower side 23, opposite to the upper side 22, and a side surface 24.

The toy figurine 100 is releasably attachable to the upper side 22 of the hub portion 20.

The three sphere connectors 30 extend radially from the side surface 24 of the hub portion 20.

The sphere connectors 30, and the hub portion 20 are preferably formed integral as a unit. However, in some not shown embodiments, the sphere connectors may be releasably attached to the hub portion 20. This may be made possible by the sphere connectors 30 and the hub portion 20 being provided with suitable complimentary coupling means.

As shown in Fig. 1A, plate sections 12 may extend radially outwards from the hub portion 20 between the sphere connectors 30. Such plate sections 12 are optional. On an upper surface of the plate sections 12 in Fig. 1A, coupling means of a first type 91 - in the form of knobs (or studs) - are provided. These may be used to attach further modular toy construction elements to the cart 10. Coupling means of a first type 91 (knobs/studs) are discussed in more detail below. In Fig. 1A, two knob type coupling means of a first type 91 are provided on each plate section 12.

The embodiment shown in Figs. 1B and Fig. 2, also comprises plate sections 12. Also these plate sections 12 extends radially outwards from the hub portion 20 between the sphere connectors 30, but in this embodiment, the plate sections 12 are not connected to outer surfaces of the sphere connectors, as is the case in the Fig. 1A embodiment.

Also in the Fig. 1B embodiment, coupling means of a first type 91 - in the form of knobs (or studs) - are provided on an upper surface of the plate sections 12. Again these may be used to attach further modular toy construction elements to the cart 10. In Fig. 1B, one knob type coupling means of a first type 91 are provided on each plate section 12.

It will be realized, that in other embodiments there may be more than three sphere connectors 30. For example, Figs. 6A-B are sections through an embodiment (Fig. 5) having four sphere connectors 30 arranged equidistantly along the periphery of the hub portion 20 (90° apart).

It is noted that the three sphere connectors 30 in the Fig. 1A and Fig. 1B embodiments are also arranged equidistantly along the periphery of the hub portion 20, (120° apart).

In either case, each sphere connector 30 is configured for releasably attaching a spherical body 300.

Further, the releasable attachment of each spherical body to a sphere connector 30 is such that when a spherical body 300 is attached to the sphere connector 30, the spherical body 300 is rotatable relative to the sphere connector 30 in all directions.

As shown in Fig. 5, the sphere connectors 30 are arranged such that the centre of the spherical bodies 300, when attached to the sphere connectors 30, are in same first plane P1, which is arranged in parallel to a plane defined by the lower surface 23 of the hub portion 20.

The upper surface 22 of the hub portion 20 is also parallel to the lower surface 23 of the hub portion 20, and therefore to the first plane P1.

The spherical bodies 300 are preferably all of equal size, i.e. they have the same radius, R. The radius of the spherical bodies 300 and the dimensions of the cart 10 are arranged such that, when a spherical body 300 is attached in each of the sphere connectors 30, and the spherical bodies 300 rest on a planar surface, e.g. a floor or a table, the lower side 23 of the hub portion is lifted above that planar surface. Further, in that situation, all other portions of the cart 10 are lifted above that surface, as shown in Fig. 5. Thereby, due to the free rotation of the spherical bodies in the sphere connectors 30 the cart may move unimpeded in every direction on a surface on which it is placed.

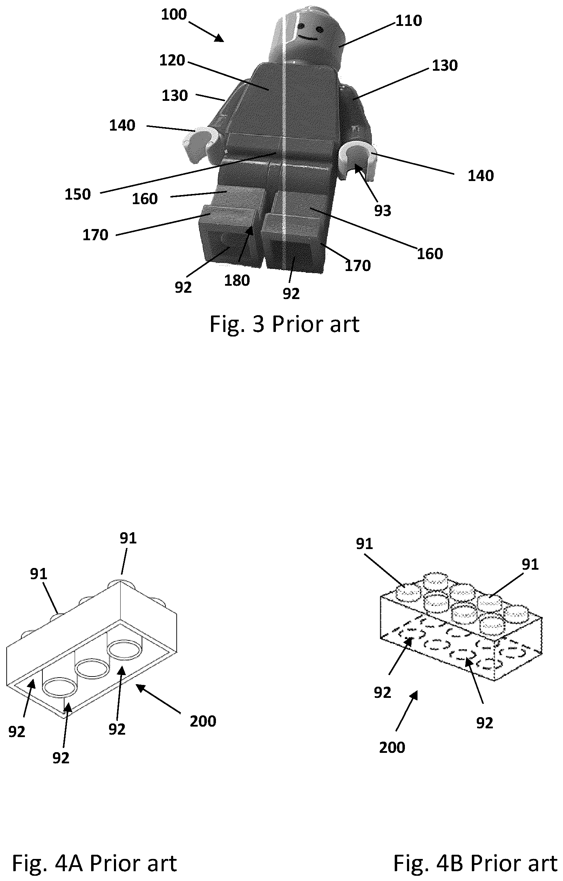

Now referring to Fig. 3, the toy figurine 100 is a figure representing a humanoid. The toy figurine comprises a head 110 extending from an upper body 120, to which arms 130 are attached on each side. In the shown example (Figs. 1 and 3), the head is rotatable relative to the upper body 120, and releasable attached thereto. Further, each arm is rotatable relative to the upper body 120, and releasable attached thereto. A hand 140 may be provided in extension of each arm 130. Each hand 140 is rotatable relative to the arm 130, and releasable attached thereto.

Each hand 140 may be shaped in a U shape, such that the hand 140 provides a coupling means of a third kind 93 for coupling a rod shaped element thereto in a snap fit connection. Thereby, the hand 140 may be configured to attach another object (not shown), such as a toy spear, a toy sword or a toy flag.

The toy figurine 100 further comprises a lower body portion 150, which is releasably attached to the upper body 120. Two legs 160 are attached to the lower body independently rotatable to the lower body 150. A foot 170 is formed in extension of each leg 160.

The toy figurine 100 further has a lower surface 180, in this embodiment provide at the bottom of the feet 170.

The toy figurine 100 is releasably attachable to the upper surface 22 of the hub portion 20 by the upper surface 22 being provided with coupling means of a first type 91 which are configured for cooperating with coupling means of a second type 92 provided on the lower surface 180 of the toy figurine 100.

In some embodiments and as exemplified in Fig. 1A, the coupling means of a first type may be provided by a particular cross sectional shape of the legs 160 or feet 170 of the toy figurine100, and where the coupling means of a second type may be provided by corresponding openings provided in the upper surface of the hub portion 20 of the cart 10, the openings having a cross sectional shape cooperating with the shape of the coupling means of the second type. Thereby, the toy figurine 100 may be loosely attached to the cart 10 in the sense that the cooperating shapes prevents movement of the toy figurine 100 relative to the cart 10 in any direction in a plane parallel to the above mentioned first plane, P1, thereby allowing manipulation (spinning, liner movement, etc.) of the cart 10 though the toy figurine 100, and allowing movement in a direction perpendicular to the first plane, P1. Thereby, the toy figurine 100 can very easily be attached to and removed from the cart 10, and further the toy figurine 100 may be ejected from the cart, for example on impact with another object.

However, as shown in Fig. 1B and Fig. 2, preferably the coupling means 91 for releasably attaching the toy figurine 100 to the upper surface 22 of the hub portion 20 are knobs, and as shown in Fig. 3 the coupling means of the second type 92 are knob-receiving openings.

Further as shown in Fig. 2 two knobs are provided as coupling means of the first type 91. When the toy figurine 100 is attached via the knob receiving openings, i.e. coupling means of the second type 92, formed in the lower surface 180 of the toy figurine, which are distanced from each other by the same distance as the two knobs on the upper surface 22 of the hub portion 20, the toy figurine will be non-rotational attached to the hub portion 20. It will be realized that the same result is achieved by the coupling in Fig. 1A.

The coupling between various objects using knobs and knob receiving openings is well known in the art from modular construction elements 200 such as shown in Fig. 4A-B.

Now, referring to Figs. 6A-B, the modular toy 1 further comprises a spinning element 40. The spinning element 40 is releasably attachable to the hub portion 20 at the lower side 23 thereof.

The spinning element 40 comprises a body portion 41 having an upper surface 42, a lower convex surface 43, and a first height, H1.

The first height, H1 is defined between the upper surface 42 and the lowermost point of the lower convex surface 43 of the spinning element 40. (when the spinning element 40 is oriented as shown in the drawings with the first coupling means 91 extending upwards).

The first height, H1, is such that when the spinning element 40 is attached to the hub portion 20, and the toy 1 is rested on a planar surface, a maximum of two of the spherical bodies 300 rest on the planar surface.

This means that if the toy 1 is spun, for example by manipulating the toy figurine 100, all of the spherical bodies 300 will elevate from the surface on which the toy 1 is spun, and will function as a classical spinning toy.

The releasable attachment of the spinning element 40 to the lower side 23 of the hub portion 20 is provided by the upper surface 42 of the spinning element 40 being provided with coupling means of a first type 91, and the lower surface 23 of the hub portion 20 being provided with coupling means of a second type 92, not shown. As indicated in Figs. 6A-B, the coupling means of the first type 91 are preferably knobs, and the coupling means of the second type 92 are cooperating knob-receiving openings. In other embodiments other types of couplings may be utilized.

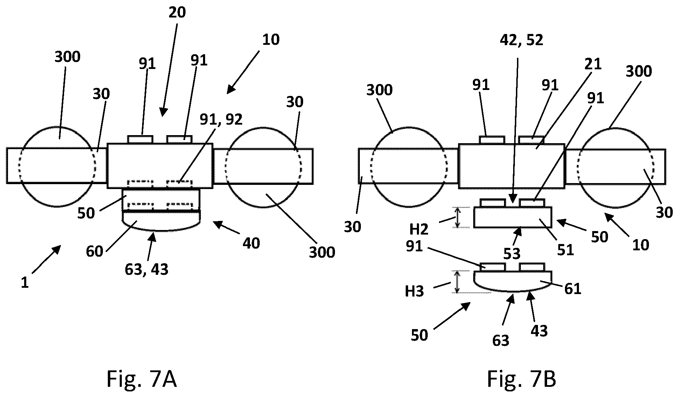

In embodiments shown in Figs. 7A-B, the spinning element 40 is formed by a combination of sub-elements. In one embodiment, the spinning element 40 comprises a spacer element 50 and spinner tile 60, attachable thereto. The spacer element 50 comprises a body 51 having height H2 from an upper side 52 to a lower side 53. The spacer element 50 is connectable at one end, the upper side 52 to the lower surface 23 of the hub portion 20. The upper side 52 of the spacer element 50 may be provided with first type coupling means 91 for example in the form of knobs, and the lower surface 23 of the hub portion 20, may as already described above be provided with knob receiving openings (second type coupling means 92). The opposite end, the lower side 53 of the spacer element 50 is releasably attachable to the spinner tile 60. The spinner tile 60 comprises a body 61, having a height, H3, between an upper side 62 and a lower side 63. The upper side 62 of the spinner tile 60 may be provided with first type coupling means 91 for example in the form of knobs as shown in Figs. 6A-B, such that when the lower side 53 of the spacer element 50 is provided with second type coupling means 92 in the form of knob receiving openings, a releasable attachment between the spacer element 50 and the spinner tile 60 is provided. The lower side 53 of the spinner tile is convex. In such embodiments the convex surface 63 spinner tile 60 forms the convex surface 43 of the spinning element 40, when the spacer element 50 and the spinner tile 60 are connected to form a spinning element 40. It will be appreciated that the third height, H3 is defined between the upper surface 62 and the lowermost point of the lower convex surface 63 of the spinning tile 60. (when the spinning tile 60 is oriented as shown in the drawings with the first coupling means 91 extending upwards).

In further, not shown embodiments, the spacer element 50 is cylindrical in shape and has tubular element rotationally attached on an outside surface thereof.

As shown in Figs. 1A, 1B, 2 and 6A, the sphere connectors 30 may be ring shaped, where an inner surface 31 of the ring-shaped sphere connector is provided with an annular cavity - or concave surface - which corresponds in shape to an arc of the spherical body 300 to be attached in the sphere connector 30.

It is to be noted that the figures and the above description have shown the example embodiments in a simple and schematic manner. Many of the specific mechanical details have not been shown since the person skilled in the art should be familiar with these details and they would just unnecessarily complicate this description. For example, the specific materials used and the specific injection moulding procedure have not been described in detail since it is maintained that the person skilled in the art would be able to find suitable materials and suitable processes to manufacture the toy according to the current invention.

### List of parts

- 1: toy
- 10: cart
- 11: cart body
- 12: plate sections extending from cart body and between adjacent sphere connectors
- 20: hub portion of cart
- 21: body of hub portion
- 22: upper side of hub portion/body of hub portion
- 23: lower side of hub portion/body of hub portion
- 24: side surface of hub portion/body of hub portion
- 30: sphere connector
- 40: spinning element
- 41: body/body portion of spinning element
- 42: upper surface of spinning element
- 43: lower, concave surface of spinning element
- 50: spacer element
- 51: body of spacer element
- 52: upper side of body of space element
- 53: lower side of body of spacer element
- 60: spinner tile
- 61: body of spinner tile
- 62: upper side of spinner tile
- 63: lower, concave surface of spinner tile
- 91: coupling means of first type
- 92: coupling means of second type
- 93: coupling means of third type
- 100: toy figurine
- 110: head of toy figurine
- 120: upper body of toy figurine
- 130: arms of toy figurine
- 140: hands of toy figurine
- 150: lower body of toy figurine
- 160: leg of toy figurine
- 170: foot of toy figurine
- 180: lower surface of toy figurine
- 200: modular construction element (prior art)
- 300: spherical body
- H1: first height, height of spinning element
- H2: second height, height of distance element
- H3: third height, height of spinner tile
- R: Radius of spherical body

## Claims

1. A modular toy (1) comprising
- a toy figurine (100); and
- a cart body (11);
wherein the cart body (11) comprises
- a hub portion (20) having an upper side (22), a lower side (23), and a side surface (24), the toy figurine (100) being releasably attachable to the upper side (22) of the hub portion (20), such that the toy figurine (100) is non-rotationally attached to the cart body (10); and
- three or more sphere connectors (30) extending radially from the side surface of the hub portion (20),
wherein each sphere connector (30) is configured for releasably attaching a spherical body (300), such that when a spherical body (300) is attached to the sphere connector (30), the spherical body (300) is rotatable relative to the sphere connector (30), and
wherein the sphere connectors (30) are arranged such that the centre of the spherical bodies (300) attached to the sphere connectors (30) are in the same plane (P1) parallel to the lower side (23) of the hub portion(20),
**characterized in the that** the sphere connectors are configured such that the sphere bodies are freely rotatable relative to the sphere connector in all directions.

2. The modular toy according to claim 1, wherein toy figurine (100) is releasably attachable to the upper surface (22) of the hub portion (20) by the upper surface (22) being provided with coupling means of a first type (91), and a lower surface (180) of the toy figurine (100) being provided with coupling means of a second type (92), and where the coupling means of a first type (91) and the coupling means of a second type (92) are mutually corresponding.

3. The modular toy according to claim 2, wherein the non-rotational attachment of the toy figurine (100) to the hub portion (20) is provided by two spaced apart coupling means of the first type (91) on the upper side (22) of the hub portion (20), and the lower surface (180) of the toy figurine (100) being provided with two equidistantly arranged coupling means of the second type (92).

4. The modular toy according to claim 2 or 3, wherein the coupling means of the first type (91) are knobs, and where the coupling means of the second type (92) are knob-receiving openings.

5. The modular toy (1) according to claim 1, further comprising a spinning element (40) releasably attachable to the hub portion (20) at the lower side (23) thereof, the spinning element (40) having an upper surface (42) and a lower convex surface (43) and a first height (H1),
wherein the first height (H1) is such that when the spinning element (40) is attached to the hub portion (20), and the toy (1) is rested on a planar surface, a maximum of two of the spherical bodies rest on the planar surface.

6. The modular toy according to claim 5, wherein the spinning element (40) is releasably attachable to the lower side (23) of the hub portion (20) by the upper surface (42) of the spinning element (40) being provided with coupling means of the first type (91), and the lower surface (23) of the hub portion (20) being provided with coupling means of the second type (92), and where the coupling means of the first type (91) and the coupling means of the second type (92) are mutually corresponding.

7. The modular toy according to claim 6, wherein the coupling means of the first type (91) are knobs, and where the coupling means of the second type (92) are knob-receiving openings.

8. The modular toy (1) according to any one of the claims 5-7, wherein the spinning element (40) comprises a spacer element (50) and spinner tile (60), where the spacer element is connectable at one end to the lower side (23) of the hub portion (20) and at an opposite end to the spinner tile, and where the convex surface (43, 63) of the spinning element (40) is the lower surface of the spinner tile (60).

9. The modular toy according to claim 6, wherein the spacer element is cylindrical in shape and has tubular element rotationally attached on an outside surface thereof.

10. The modular toy (1) according to any one of the claims 1-9, wherein the sphere connectors (30) are ring shaped, and wherein an inner surface (31) of the ring-shaped sphere connector is provided with an annular cavity corresponding to an arc of the spherical body (300).

11. The modular toy (1) according to any one of the claims 1-10, wherein the hub portion (20) and the sphere connectors (30) are formed as an integral unit.

12. The modular toy (1) according to any one of the claims 1-10, wherein the sphere connectors (30) are detachably attached to the hub portion (20).

## Patentansprüche

1. Modulares Spielzeug (1), umfassend
- eine Spielzeugfigur (100); und
- ein Wagenkasten (11);
wobei der Wagenkasten (11) Folgendes umfasst
- ein Nabenabschnitt (20), der eine Oberseite (22), eine Unterseite (23) und eine Seitenfläche (24) aufweist, wobei die Spielzeugfigur (100) lösbar an der Oberseite (22) des Nabenabschnitts (20) so befestigt werden kann, dass die Spielzeugfigur (100) drehfest am Wagenkasten (10) befestigt ist; und
- drei oder mehr Kugelverbinder (30), die sich radial von der seitlichen Oberfläche des Nabenabschnitts (20) erstrecken,
wobei jeder Kugelverbinder (30) so konfiguriert ist, dass er einen kugelförmigen Körper (300) lösbar so befestigt, dass, wenn ein kugelförmiger Körper (300) am Kugelverbinder (30) befestigt ist, der kugelförmige Körper (300) in Bezug auf den Kugelverbinder (30) drehbar ist, und
wobei die Kugelverbinder (30) so angeordnet sind, dass der Mittelpunkt der an den Kugelverbindern (30) befestigten Kugelkörper (300) in derselben Ebene (P1) parallel zur Unterseite (23) des Nabenabschnitts (20) liegt,
**dadurch gekennzeichnet, dass** die Kugelverbinder so konfiguriert sind, dass die Kugelkörper in Bezug auf den Kugelverbinder in alle Richtungen frei drehbar sind.

2. Modulares Spielzeug nach Anspruch 1, wobei die Spielzeugfigur (100) an der oberen Oberfläche (22) des Nabenabschnitts (20) lösbar befestigt werden kann, indem die ober Oberfläche (22) mit einem Kopplungsmittel (91) eines ersten Typs bereitgestellt ist und eine untere Oberfläche (180) der Spielzeugfigur (100) mit einem Kopplungsmittel (92) eines zweiten Typs bereitgestellt ist, und wobei das Kopplungsmittel des ersten Typs (91) und das Kopplungsmittel des zweiten Typs (92) sich einander entsprechen.

3. Modulares Spielzeug nach Anspruch 2, wobei die drehfeste Befestigung der Spielzeugfigur (100) am Nabenabschnitt (20) durch zwei voneinander beabstandete Kopplungsmittel des ersten Typs (91) auf der Oberseite (22) des Nabenabschnitts (20) bereitgestellt wird und die Unterseite (180) der Spielzeugfigur (100) mit zwei äquidistant angeordneten Kopplungsmitteln des zweiten Typs (92) bereitgestellt ist.

4. Modulares Spielzeug nach Anspruch 2 oder 3, wobei das Kopplungsmittel des ersten Typs (91) Knöpfe sind und bei das Kopplungsmittel des zweiten Typs (92) Knopfaufnahmeöffnungen sind.

5. Modulares Spielzeug (1) nach Anspruch 1, weiter umfassend ein Drehelement (40), das am Nabenabschnitt (20) an der Unterseite (23) davon lösbar befestigt werden kann, wobei das Drehelement (40) eine obere Oberfläche (42), eine konvexe untere Oberfläche (43) und eine erste Höhe (H1) aufweist.
wobei die erste Höhe (H1) so ist, dass, wenn das Drehelement (40) am Nabenabschnitt (20) befestigt ist und das Spielzeug (1) auf einer ebenen Fläche ruht, höchstens zwei der kugelförmigen Körper auf der ebenen Fläche ruhen.

6. Modulares Spielzeug nach Anspruch 5, wobei das Drehelement (40) an der Unterseite (23) des Nabenabschnitts (20) dadurch lösbar befestigt werden kann, dass die obere Oberfläche (42) des Drehelements (40) mit Kopplungsmitteln des ersten Typs (91) und die untere Oberfläche (23) des Nabenabschnitts (20) mit Kopplungsmitteln des zweiten Typs (92) bereitgestellt ist, und wobei das Kopplungsmittel des ersten Typs (91) und das Kopplungsmittel des zweiten Typs (92) einander entsprechen.

7. Modulares Spielzeug nach Anspruch 6, wobei es die Kopplungsmittel des ersten Typs (91) Knöpfe sind und die die Kopplungsmittel des zweiten Typs (92) Knopfaufnahmeöffnungen sind.

8. Modulares Spielzeug (1) nach einem der Ansprüche 5-7, wobei das Drehelement (40) ein Abstandselement (50) und eine Drehscheibe (60) umfasst, wobei das Abstandselement an einem Ende mit der Unterseite (23) des Nabenabschnitts (20) und am gegenüberliegenden Ende mit der Drehscheibe verbindbar ist und die konvexe Oberfläche (43, 63) des Drehelements (40) die untere Oberfläche der Drehscheibe (60) ist.

9. Modulares Spielzeug nach Anspruch 6, wobei das Abstandselement in der Form zylindrisch ist und ein rohrförmiges Element aufweist, das an einer Außenfläche davon drehbar befestigt ist.

10. Modulares Spielzeug (1) nach einem der Ansprüche 1-9, wobei die Kugelverbinder (30) ringförmig sind, und wobei eine Innenfläche (31) des ringförmigen Kugelverbinders mit einem ringförmigen Hohlraum bereitgestellt ist, der einem Bogen des kugelförmigen Körpers (300) entspricht.

11. Modulares Spielzeug (1) nach einem der Ansprüche 1-10, wobei der Nabenabschnitt (20) und die Kugelverbinder (30) als eine integrierte Einheit gebildet sind.

12. Modulares Spielzeug (1) nach einem der Ansprüche 1-10, wobei die Kugelverbinder (30) abnehmbar am Nabenabschnitt (20) befestigt sind.

## Revendications

1. Jouet modulaire (1) comprenant
- une figurine jouet (100) ; et
- un corps de chariot (11) ;
dans lequel le corps de chariot (11) comprend
- une partie moyeu (20) présentant un côté supérieur (22), un côté inférieur (23) et une surface latérale (24), la figurine jouet (100) pouvant être fixée de manière libérable au côté supérieur (22) de la partie moyeu (20), de telle sorte que la figurine jouet (100) soit fixée de manière non rotative au corps de chariot (10) ; et
- trois raccords de sphère (30) ou plus s'étendant radialement à partir de la surface latérale de la partie moyeu (20),
dans lequel chaque raccord de sphère (30) est configuré pour fixer de manière libérable un corps sphérique (300), de telle sorte que, lorsqu'un corps sphérique (300) est fixé au raccord de sphère (30), le corps sphérique (300) soit rotatif par rapport au raccord de sphère (30), et
dans lequel les raccords de sphère (30) sont agencés de telle sorte que le centre des corps sphériques (300) fixés aux raccords de sphère (30) soit dans le même plan (P1) parallèle au côté inférieur (23) de la partie moyeu (20),
**caractérisé en ce que** les raccords de sphère sont configurés de telle sorte que les corps sphériques soient librement rotatifs par rapport au raccord de sphère dans toutes les directions.

2. Jouet modulaire selon la revendication 1, dans lequel la figurine jouet (100) peut être fixée de manière libérable à la surface supérieure (22) de la partie moyeu (20) par la surface supérieure (22) qui est pourvue de moyens d'accouplement d'un premier type (91), et une surface inférieure (180) de la figurine jouet (100) qui est pourvue de moyens d'accouplement d'un second type (92), et où les moyens d'accouplement d'un premier type (91) et les moyens d'accouplement d'un second type (92) sont mutuellement correspondants.

3. Jouet modulaire selon la revendication 2, dans lequel la fixation non rotative de la figurine jouet (100) à la partie moyeu (20) est fournie par deux moyens d'accouplement espacés du premier type (91) sur le côté supérieur (22) de la partie moyeu (20), et la surface inférieure (180) de la figurine jouet (100) est pourvue de deux moyens d'accouplement agencés de manière équidistante du second type (92).

4. Jouet modulaire selon la revendication 2 ou 3, dans lequel les moyens d'accouplement du premier type (91) sont des saillies, et où les moyens d'accouplement du second type (92) sont des ouvertures recevant des saillies.

5. Jouet modulaire (1) selon la revendication 1, comprenant en outre un élément tournant (40) pouvant être fixé de manière libérable à la partie moyeu (20) au niveau du côté inférieur (23) de celle-ci, l'élément tournant (40) présentant une surface supérieure (42) et une surface convexe inférieure (43) et une première hauteur (H1),
dans lequel la première hauteur (H1) est telle que, lorsque l'élément tournant (40) est fixé à la partie moyeu (20) et le jouet (1) repose sur une surface plane, un maximum de deux des corps sphériques reposent sur la surface plane.

6. Jouet modulaire selon la revendication 5, dans lequel l'élément tournant (40) peut être fixé de manière libérable au côté inférieur (23) de la partie moyeu (20) par la surface supérieure (42) de l'élément tournant (40) qui est pourvue de moyens d'accouplement du premier type (91), et la surface inférieure (23) de la partie moyeu (20) qui est pourvue de moyens d'accouplement du second type (92), et où les moyens d'accouplement du premier type (91) et les moyens d'accouplement du second type (92) sont mutuellement correspondants.

7. Jouet modulaire selon la revendication 6, dans lequel les moyens d'accouplement du premier type (91) sont des saillies, et où les moyens d'accouplement du second type (92) sont des ouvertures recevant des saillies.

8. Jouet modulaire (1) selon l'une quelconque des revendications 5-7, dans lequel l'élément tournant (40) comprend un élément d'espacement (50) et une tuile d'organe tournant (60), où l'élément d'espacement peut être relié à une extrémité au côté inférieur (23) de la partie moyeu (20) et à une extrémité opposée à la tuile d'organe tournant, et où la surface convexe (43, 63) de l'élément tournant (40) est la surface inférieure de la tuile d'organe tournant (60).

9. Jouet modulaire selon la revendication 6, dans lequel l'élément d'espacement est de forme cylindrique et présente un élément tubulaire fixé de manière rotative sur une surface extérieure de celui-ci.

10. Jouet modulaire (1) selon l'une quelconque des revendications 1-9, dans lequel les raccords de sphère (30) sont en forme de bague, et dans lequel une surface intérieure (31) du raccord de sphère en forme de bague est pourvue d'une cavité annulaire correspondant à un arc du corps sphérique (300).

11. Jouet modulaire (1) selon l'une quelconque des revendications 1-10, dans lequel la partie moyeu (20) et les raccords de sphère (30) sont formés comme une unité d'un seul tenant.

12. Jouet modulaire (1) selon l'une quelconque des revendications 1-10, dans lequel les raccords de sphère (30) sont fixés de manière détachable à la partie moyeu (20).
